# EUROPEAN PATENT APPLICATION

(11) **EP 4 753 228 A1**
(43) Date of publication of application: **03.06.2026**
(21) Application number: 24845123.9
(22) Date of filing: 17.04.2024
(51) Int. Cl.: H04L 45/64, H04L 41/0895, H04L 41/5041

(54) **CONTROL DEVICE, CONTROL SYSTEM, AND CONTROL METHOD**

(30) Priority: 25.07.2023 JP 2023121014
(71) Applicant: KABUSHIKI KAISHA TOSHIBA, Minato-ku Tokyo 105-0023 (JP)
(72) Inventor: HIRANO, Tatsuma, Kawasaki-shi, Kanagawa 212-0013 (JP); MATSUYAMA, Hiroki, Kawasaki-shi, Kanagawa 212-0013 (JP); OHNISHI, Naoya, Kawasaki-shi, Kanagawa 212-0013 (JP)
(74) Representative: AWA Sweden AB
(86) International application number: PCT/JP2024/015250
(87) International publication number: WO 2025/022738

(57) **Abstract**

To provide a control device, a control system, and a control method that enable control through a virtual network to be executed more stably.

A control device according to the present embodiment is a control device configured to periodically execute control using a plurality of virtual networks, and includes a memory part, a selector, and a communicator. The memory part is configured to store therein control data used for the control. The selector is configured to select a virtual network used for the control from a plurality of virtual networks according to an attribute of the control data. The communicator is configured to transmit the control data using a virtual network selected by the selector.

## Description

### Field

The embodiments of the present invention relate to a control device, a control system, and a control method.

### Background

There is commonly known a technique of generating a plurality of virtual networks by network slicing. There is also known a technique in which a control device performs plural types of control processing on a device through a network.

### Citation List

### Patent Literature

Patent Literature 1: Japanese Patent Application No. 2021-539647

### Summary

### Technical Problem

However, there is a case where such a plurality of virtual networks are generated while these networks have certain communication characteristics. Therefore, when a control device executes control on a device with plural types of control processing through a plurality of virtual networks, there is a risk that, depending on the type of selected virtual networks, control processing cannot be finished within a targeted period and redundancy of processing capabilities is generated on the virtual networks.

In order to solve this problem, an object of the present embodiment is to provide a control device, a control system, and a control method that enable control through virtual networks to be executed more stably.

### Solution to Problem

A control device according to the present embodiment is a control device configured to periodically execute control using a plurality of virtual networks, and includes a memory part, a selector, and a communicator. The memory part is configured to store therein control data used for the control. The selector is configured to select a virtual network used for the control from a plurality of virtual networks according to an attribute of the control data. The communicator is configured to transmit the control data using a virtual network selected by the selector.

### Effect of the Invention

It is possible to execute control through virtual networks more stably.

### Brief Description of Drawings

[FIG. 1] FIG. 1 is a system outline diagram of a control system according to the present embodiment.
[FIG. 2] FIG. 2 is a block diagram illustrating a configuration example of a control device.
[FIG. 3] FIG. 3 is a control management table illustrating examples of control processing.
[FIG. 4] FIG. 4 is a flowchart illustrating an example of control processing performed by a control manager.
[FIG. 5] FIG. 5 is a correspondence table of virtual networks.
[FIG. 6] FIG. 6 is a block diagram illustrating a configuration example of a control device according to a second embodiment.
[FIG. 7] FIG. 7 is a flowchart illustrating a processing example of a network slicing resource manager.

### Description of Embodiments

A control device and a control system according to embodiments of the present invention will now be explained in detail with reference to the drawings. The embodiments described below are only examples of the embodiments of the present invention and the present invention is not to be construed as being limited to these embodiments. Further, in the drawings referred to in the embodiments, the same parts or parts having identical functions are denoted by like or similar reference signs and redundant explanations thereof are omitted in some cases. Furthermore, for convenience of explanation, there are cases where dimensional ratios in the drawings are different from those of actual products and some part of configurations is omitted from the drawings.

### (First embodiment)

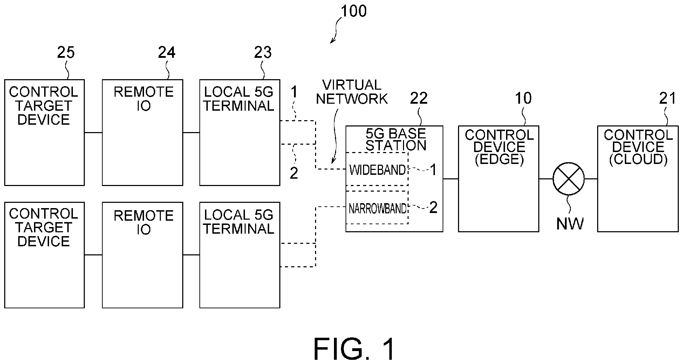

FIG. 1 is a system outline diagram of a control system 100 according to the present embodiment. The control system 100 is a system that controls a plurality of control target devices 25 through a plurality of virtual networks by network slicing. The control system 100 includes a control device 10, a control device 21, a base station 22, a plurality of terminals 23, a plurality of remote IOs 24, and a plurality of control target devices 25. In the present embodiment, an example in which two control target devices 25 are provided is described in order to simplify explanations; however, the number thereof is not limited to two. For example, the number of the control target devices 25 may be three or more and the control device 21 may also be provided in plural.

The control device 10 includes, for example, a CPU (Censral Processing Unis), a memory, and the like. The control device 10 is provided in an edge located close to the control target devices 25 and is a device that controls a plurality of control target devices 25 by performing plural types of control processing. Further, for example, the control device 10 executes short period control on the plurality of control target devices 25.

Furthermore, the control device 10 is capable of performing control processing in general as a 5G core network such as relay control in 5G communication and generation, allocation (selection), and deletion of virtual networks by network slicing. A 5G core network of the control device 10 is constituted by causing a plurality of devices such as an MME (Mobility Management Entity), an SGW (Serving Gateway), and a PGW (Packet data network Gateway) to cooperate with one another. Accordingly, there is a case where the control device 10 represents a collective term of such a plurality of devices. Details of the control device 10 are described later.

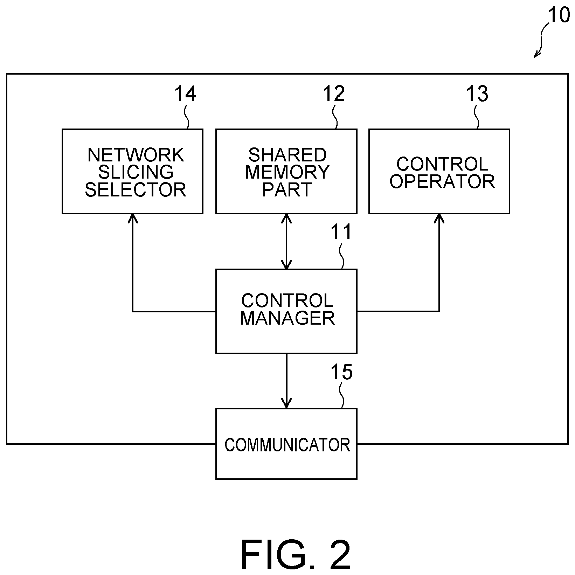

The control device 21 includes, for example, a CPU (Censral Processing Unis), a memory, and the like. The control device 21 is a device capable of controlling a plurality of control target devices 25 independently with the control device 10 through a network NW such as the Internet. That is, the control device 21 is provided in a cloud and executes long period control on the plurality of control target devices 25. The control device 21 performs data input and data output to and from the plurality of control target devices 25 through a shared memory part 12 (see FIG. 2 described later) of the control device 10. Accordingly, redundant generation of accesses from a plurality of control devices 10 and 21 to the remote IOs 24 is suppressed.

Further, the control device 10 manages virtual networks used by the control device 10 and the control device 21 in a consolidating manner. Accordingly, it is possible to prevent virtual networks used by the control device 10 and the control device 21 from interfering with each other and the selection standard of virtual networks from not matching each other in each of the control device 10 and the control device 21.

The network NW is the Internet, for example, but the network NW is not limited thereto. For example, a local communication line such as a LAN (Loacal Area Network), a wide-area wired communication line such as a WAN (Wide Area Network), or a wireless communication line according to communications standards such as 3G (Generation), 4G, and 5G may be also used.

The base station 22 functions as a RAN (Radio Access Network), for example, and constitutes a communication network of a 5G (5th Generation) network. The 5G network according to the present embodiment is a local 5G network, for example. The base station 22 outputs device side data of a plurality of control target devices received from a plurality of terminals 23 to the control device 10. Further, the base station 22 transmits control data generated by the control device 10 and the control device 21 and input from the control device 10 to the plurality of terminals 23. It is possible to use both wired communication and wireless communication for communication between the base station 22 and the control device 10.

Each of the terminals 23 includes, for example, a CPU (Central Processing Unis), a memory, a storage, and the like. A virtual network selected by the control device 10 is allocated to these terminals 23. A plurality of virtual networks are logical networks generated by network slicing that is a 5G function. In the present embodiment, division of networks is referred to as network slicing. Due to such network slicing, it is possible to divide network resources into a plurality of virtual networks having mutually different communication characteristics and to provide wireless communication suitable for each control processing with respect to a plurality of control target devices 25.

In the present embodiment, in a 5G network constituted by the base station 22 and a plurality of terminals 23, two virtual networks are present, which are a wideband and low-delay virtual network (network slicing) 1 and a narrowband and high-delay virtual network (network slicing) 2. While there are two virtual networks in the present embodiment, the number of virtual networks is not limited to two. For example, three or more virtual networks having mutually different communication characteristics may be used.

Each of the remote IOs 24 includes a plurality of physical communication ports. Mutually different networks may be connected to the respective communication ports. One end of the remote IO 24 is connected to a terminal 23 and the other end is connected to a control target device 25.

The control target devices 25 perform predetermined control processing according to control data received from the remote IOs 24. For example, the control target devices 25 are industrial robot arms, drive motors, cameras, and the like. Device side data (for example, the position and angle of each joint in a case of robot arms, image data in a case of cameras, and the rotation speed and rotation number in a case of drive motors) and the like obtained from the control target devices 25 are sent to the shared memory part 12 (see FIG. 2) of the control device 10 through a remote IO 24, a terminal 23, a virtual network, and the base station 22.

For example, a TCP (Transmission Control Protocol) using an IP (Internet Protocol) packet is used for communication of the device side data. Alternatively, UDP (User Datagram Protocol) communication or communication with a MAC (Medium Access Control) layer using a RAW packet may be used therefor, and it is not limited to these methods.

Further, for example, Full Duplex is used for virtual networks and the network NW. Accordingly, it is possible to perform upstream communication and downstream communication simultaneously. In the present embodiment, it is assumed that resources of network slicing such as the frequency bandwidth and delay time of each virtual network and the number of usable terminals 2 are determined in advance.

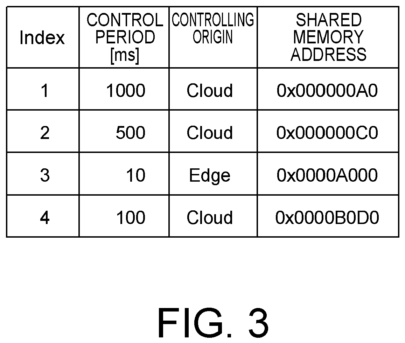

Details of the control device 10 are described here with reference to FIGS. 2 and 3. FIG. 2 is a block diagram illustrating a configuration example of the control device 10. As illustrated in FIG. 2, the control device 10 is configured to include a control manager 11, the shared memory part 12, a control operator 13, a network slicing selector 14, and a communicator 15. The control device 10 uses the communicator 15 to periodically communicate with another control device 21 provided in a cloud through the network NW and the control target devices 25 connected through a 5G network. The shared memory part 12 according to the present embodiment corresponds to a memory part and the network slicing selector 14 corresponds to a selector.

FIG. 3 is a control management table illustrating examples of control processing. As illustrated in FIG. 3, the control processing performed by the control device 10 and the control device 21 is associated with indexes 1 to N as a control management table in advance and stored in the shared memory part 12. Each of the indexes 1 to N corresponds to each control processing. The control processing of an index m is, for example, control processing performed by a control target device 25 with respect to a robot arm and is processing of, for example, acquiring the current arm position and joint angle as device data and operating control data causing the robot arm to shift to an arm position and a joint angle in the next period. With this processing, for example, a robot arm changes its orientation to the arm position and the joint angle in the next period.

As illustrated in FIG. 3, the shared memory part 12 includes an area used for I/O data handled by the control device 10 and an area used for I/O data handled by the control device 21. In FIG. 3, initial addresses of an area used for I/O data and of an area in which operated control data is stored are assumed as shared memory addresses. Setting of areas in the shared memory part 12 is only an example and it is not limited to this example.

Further, the area used for I/O data handled by the control device 10 is divided into areas used for each of a plurality of control target devices 25. Similarly, the area used for I/O data handled by the control device 21 is divided into areas used for each of a plurality of control target devices 25.

The control manager 11 is constituted by a plurality of CPUs, for example, and controls the entirety of the control device 10 by reading and executing control programs stored in the shared memory part 12 and the control management table (see FIG. 3 described later). The control manager 11 performs control processing in general as a 5G core network such as relay control in 5G communication and generation, allocation, deletion, and the like of virtual networks by network slicing.

The control manager 11 causes the control operator 13 to perform operation of control processing contents of each of a plurality of control target devices 25. That is, the control operator 13 generates and operates control data on the control device 10 side in each predetermined interval set for each control processing under control of the control manager 11. The control manager 11 includes a controlling timer and works with a plurality of control periods required in each control processing, thereby generating a timing control signal associated with each control processing.

For example, the control manager 11 acquires device side data required for operating predetermined control data based on the timing control signal and causes the shared memory part 12 (see FIG. 2) to store the acquired data therein. Thereafter, the control manager 11 causes the control operator 13 to operate control data corresponding to control processing contents using the device side data. This control data is written in an area (see FIG. 3) of the shared memory part 12 allocated to each control data. For example, a control target device 25 as a transmitting destination, a control data capacity, a control period, and a controlling origin are associated with the control data. The controlling origin is identification information identifying the control device 10 as an edge side or the control device 21 as a cloud side.

Meanwhile, the control device 21 reads I/O data stored in each of a plurality of control target devices 25 in each predetermined control period (see FIG. 3) set for each control processing from an area used for the control device 21 of the shared memory part 12 through the control manager 11, thereby operating control data corresponding to control processing contents. At this time, the control manager 11 acquires device side data according to a request from the control device 21 side and causes the shared memory part 12 to store the acquired data therein. Thereafter, the control device 21 performs a writing process of each control data corresponding to control processing contents in an area of the shared memory part 12 allocated to each control data through the control manager 11. For example, a control target device 25 as a transmitting destination, a control data capacity, a control period, and a controlling origin are associated with the control data. Such a control example is only one example and is not limited thereto. For example, the control manager 11 may also perform writing of control side data in an area of the control device 21 side of the shared memory part 12 autonomously and repeatedly according to a predetermined period.

The network slicing selector 14 selects a virtual network used for communication according to control processing contents under control of the control manager 11. The communicator 15 includes a communication IF on a 5G side performing communication with the base station 22 and a communication IF on a wide area network side such as the network NW. As described above, for example, Full Duplex is used for communication performed by the communicator 15. Accordingly, it is possible to perform upstream communication and downstream communication simultaneously.

Selection algorithms used by the network slicing selector 14 to select a virtual network are set in plural. The control manager 11 is capable of setting a selection algorithm in the network slicing selector 14 according to control purposes. For example, a selection algorithm a is an algorithm prioritizing control periods, a selection algorithm b is an algorithm prioritizing control data capacities, and a selection algorithm c is an algorithm prioritizing controlling origins.

To be more specific, when the control manager 11 selects the selection algorithm a, the control manager 11 outputs only a control period associated with control data to the network slicing selector 14. The network slicing selector 14 determines the threshold of the control period and selects a virtual network to be used. For example, the network slicing selector 14 selects the wideband and low-delay virtual network 1 in a case of control for a short control period and selects the narrowband and high-delay virtual network 2 in a case of control for a long control period. The control manager 11 uses information selected by the network slicing selector 14 to transmit control data to the terminal 23 of an intended control target device 25 through the communicator 15 and the base station 22 and using the selected virtual network. With this process, a virtual network having communication characteristics corresponding to a certain control period is selected and control data is transmitted within the control period.

When the control manager 11 selects the selection algorithm b, the control manager 11 outputs only a control data capacity associated with control data to the network slicing selector 14. The network slicing selector 14 determines the threshold of the control data capacity and selects a virtual network to be used. For example, when the data size of the control data is large, the network slicing selector 14 selects the wideband and low-delay virtual network 1 and when the data size of the control data is small, the network slicing selector 14 selects the narrowband and high-delay virtual network 2. The control manager 11 uses information selected by the network slicing selector 14 to transmit control data to the terminal 23 of an intended control target device 25 through the communicator 15 and the base station 22 and using the selected virtual network. With this process, a virtual network having communication characteristics corresponding to the data size of control data is selected and the control data is transmitted within a control period.

When the control manager 11 selects the selection algorithm c, the control manager 11 outputs only information on a controlling origin associated with control data to the network slicing selector 14. The network slicing selector 14 selects a virtual network to be used according to whether the controlling origin is a cloud or an edge. For example, the network slicing selector 14 selects the wideband and low-delay virtual network 1 in a case of control from an edge and selects the narrowband and high-delay virtual network 2 in a case of control from a cloud. With this process, a virtual network having communication characteristics corresponding to a certain controlling origin is selected and control data is transmitted within a control period.

Selection of a virtual network may be also made by comprehensively determining information on a control period, the data size of control data (a control data length), and a controlling origin. That is, the network slicing selector 14 uses at least any information on a control period, a control data length, or a controlling origin to select a virtual network.

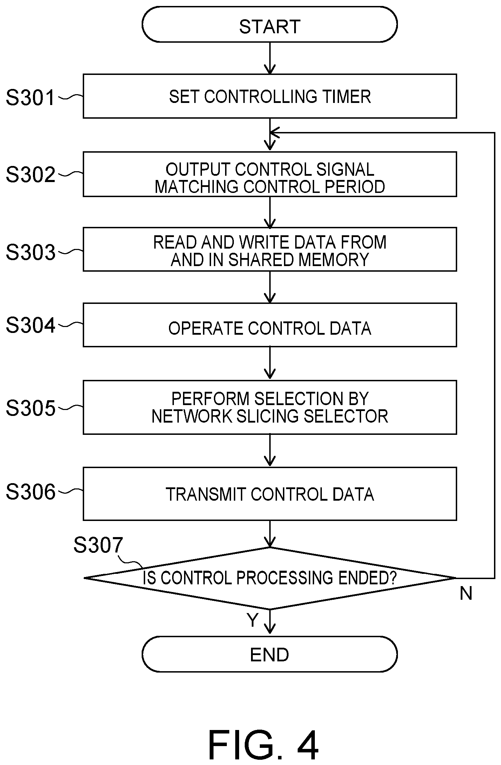

A configuration example of the control system 100 according to the first embodiment is as described above. An example of control processing performed by the control manager 11 is described below. FIG. 4 is a flowchart illustrating an example of control processing performed by the control manager 11. An example of transmitting control data on the control device 10 side with respect to one control processing is described here.

First, the control manager 11 uses information of the control management table illustrated in FIG. 3 to set a controlling timer associated with control processing (Step S301). In this manner, the time of the controlling timer is set in advance according to the type of control processing. For example, the controlling timer is set for each control processing in a specific memory address of the supply memory part 12 according to the control management table illustrated in FIG. 3.

Next, the control manager 11 outputs a timing control signal associated with control processing according to the controlling timer to the control operator 13 and the communicator 15, and starts the control processing (Step S302).

Next, the control manager 11 causes the communicator 15 to acquire device side data required for the control processing according to the timing control signal associated with the control processing, and stores the acquired data in the shared memory part 12 (Step S303).

Next, the control manager 11 issues an instruction for control operation to the control operator 13, and the control operator 13 operates control data corresponding to the control processing and causes the shared memory part 12 to store the operated control data therein (Step S304). As described above, for example, a control target device 25 as a transmitting destination, a control data capacity, a control period, and a controlling origin are associated with the control data.

Next, the control manager 11 acquires information data according to a selection algorithm from the control data, outputs the acquired information data to the network slicing selector 14, and causes the network slicing selector 14 to select a virtual network (Step S305). At this step, the control manager 11 outputs information indicating an edge as transmitting origin information to the network slicing selector 14. With this process, the network slicing selector 14 selects the wideband and low-delay virtual network 1 and outputs the selection to the control manager 11.

Next, the control manager 11 the control manager 11 causes communication using the virtual network 1 to be performed between the base station 22 and a terminal 23 of a control target device 25 as a transmitting destination (Step S306). With this process, the control data is output to the control target device 25 through a remote IO 24. Thereafter, the control target device 25 executes control according to the control data.

Next, the control manager 11 determines whether the control processing is to be ended (Step S307), and when the control manager 11 determines not to end the control processing (N at Step S307), processes from Step S302 are repeated. On the other hand, when the control manager 11 determines to end the control processing (Y at Step S307), this control processing is ended.

As described above, according to the present embodiment, the network slicing selector 14 is configured to select a virtual network according to the attribute of control data for controlling the control target devices 25. Accordingly, even when plural pieces of control data are transmitted periodically and repeatedly, a virtual network having communication characteristics according to the attribute of control data can be used and divided network resources can be used efficiently.

As described above, wideband and low-delay network slicing can be selected in a case of a long control data length, a short control period, and the like and a narrowband and high-delay network slicing can be selected in a case of a short control data length, a long control period, and the like according to the attribute of control data. Accordingly, by selecting a virtual network having appropriate communication characteristics corresponding to a certain control data length and a certain control period, it is possible to execute control in which the control period of control data is maintained.

Further, the control device 10 manages virtual networks used by the control device 10 and the control device 21 in a consolidating manner by using the shared memory part 12. Accordingly, it is possible to prevent virtual networks used by the control device 10 and the control device 21 from interfering with each other and the selection standard of virtual networks from not matching each other in each of the control device 10 and the control device 21.

### (First modification of first embodiment)

The network slicing selector 14 according to a first modification of the first embodiment is different from that in the control system 100 according to the first embodiment in a feature that a virtual network to be used in each control processing is set in advance. Differences from the control system 100 according to the first embodiment are described below.

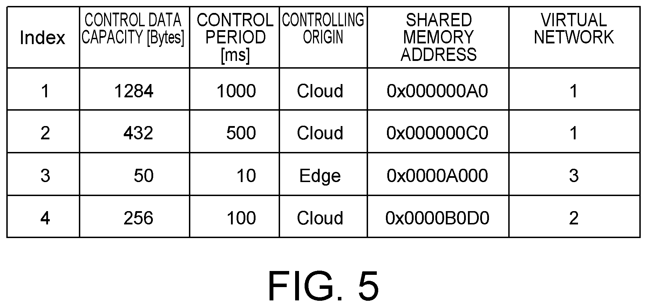

FIG. 5 is a correspondence table of virtual networks. As illustrated in FIG. 5, control processing performed by the control device 10 and the control device 21 is associated with indexes 1 to N as a correspondence table and stored in the shared memory part 12 in advance. In FIG. 5, for ease of explanations, only the indexes 1 to 4 are graphically illustrated. Further, it is assumed that resources of network slicing such as the frequency bandwidth and delay time and the number of usable terminals 2 are determined in advance. When the network slicing selector 14 includes a dedicated memory, the network slicing selector 14 may store therein the correspondence table (see FIG. 5) of virtual networks. Further, the correspondence table illustrated in FIG. 5 may be updated according to a delay status and the like of the network NW in operation.

As described above, Index is a number associated with control processing and allocated. Index is associated with control data operated by the control device 10 and the control device 21 according to the present embodiment.

A control data capacity is a capacity [Byte] allocated to control data. As described above, a control period is a period during which control processing corresponding to Index is performed. As described above, information of a controlling origin is information indicating any of the control device 10 and the control device 21. Edge is information indicating the control device 10 and Cloud is information indicating the control device 21. As described above, a shared memory address indicates a storage area of device side data used for performing control processing corresponding to Index and a storage area of control data on the control device 10 side and the control device 22 side.

For example, a control program corresponding to Index is stored in the shared memory part 12. Accordingly, control data corresponding to Index is generated by the control manager 11 executing the control program. Similarly, control data corresponding to Index is also generated by the control device 21 executing a control program for the control device 21.

The network slicing selector 14 is also capable of selecting a virtual network by referring to the correspondence table illustrated in FIG. 5. For example, the network slicing selector 14 selects the virtual network 1 when Index associated with control data is 1, selects the virtual network 1 when Index associated with control data is 2, selects the virtual network 3 when Index associated with control data is 3, and selects the virtual network 1 when Index associated with control data is 4. The network (network slicing) 3 is, for example, an intermediate band and intermediate-delay virtual network. Thereafter, the control manager 11 uses a virtual network selected by the network slicing selector 14 to transmit control data as a control operation result to the terminal 23 of an intended control target device 25 from the communicator 15 through the base station 22.

As described above, according to the present embodiment, the network slicing selector 14 selects a virtual network associated with control processing in advance. Accordingly, the network slicing selector 14 can select a virtual network associated with control processing in advance when control data with respect to each control processing is stored in a shared memory address. With this configuration, control processing can be sped up even more.

### (Second modification of first embodiment)

The network slicing selector 14 according to a second modification of the first embodiment is different from that in the control system 100 according to the first modification of the first embodiment in a feature that a virtual network associated with a shared memory address in advance is selected. Differences from the control system 100 according to the first modification of the first embodiment are described below.

The network slicing selector 14 according to the second modification of the first embodiment can also select a virtual network associated with a shared memory address used for control processing in advance. For example, control data corresponding to the control processing is stored in a shared memory address of the shared memory part 12 by the control manager 11 executing a control program. Similarly, control data corresponding to the control processing is also stored in a shared memory address of the control manager 11 the shared memory part 12 by the control device 21 executing a control program for the control device 21.

As illustrated in FIG. 5, any of the virtual networks 1 to 3 is associated with a shared memory address in advance. In this manner, since a shared memory address is presented as an address map for each control processing, virtual networks can be divided in accordance with addresses. Accordingly, the network slicing selector 14 can select a virtual network in which control data is associated with a shared memory address stored in the shared memory part 12.

As described above, according to the present embodiment, the network slicing selector 14 selects a virtual network in which control data is associated with a shared memory address stored in the shared memory part 12. Accordingly, the network slicing selector 14 can select a virtual network associated with a shared memory address in advance when each control data is stored in a shared memory address. With this configuration, control processing can be sped up even more.

### (Second embodiment)

The control system 100 according to a second embodiment is different from the control system 100 according to the first embodiment in a feature that resources of virtual networks are decided corresponding to a control data length and a control period. Differences from the control system 100 according to the first embodiment are described below.

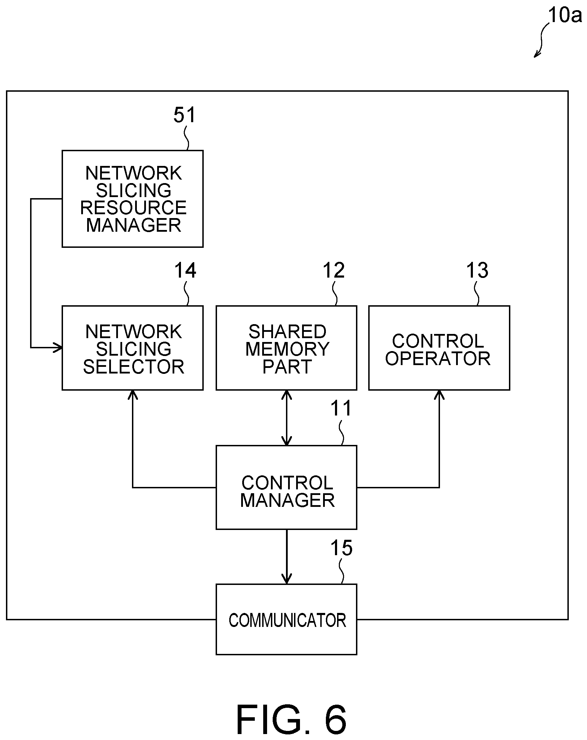

FIG. 6 is a block diagram illustrating a configuration example of a control device 10a according to the second embodiment. As illustrated in FIG. 6, the control device 10a according to the second modification of the first embodiment is different from that of the control system 100 according to the first embodiment in a feature that the control device 10a further includes a network slicing resource manager 51.

The network slicing resource manager 51 uses information (see FIG. 5) on control periods and control data capacities stored in the shared memory part 12 to select network resources. It is also possible that the network slicing resource manager 51 includes a dedicated memory and the network slicing resource manager 51 stores information (see FIG. 4) on control periods and control data lengths in the memory.

The network slicing resource manager 51 uses a control period and a control data length of each periodically repeated control processing to operate a required frequency bandwidth and delay time and the number of usable terminals. In this case, for example, as for the frequency bandwidth, it is possible to set a value obtained by taking a margin from a data amount calculated based on a control period and a control data length. Further, it is possible that the delay time is set to be a value less than half a control period. Furthermore, as also for the number of usable terminals, it is possible to set a value obtained by taking a margin from an assumed number of terminals to be used. Setting these values is not limited to these methods. The control data length means, for example, a capacity including a processing code and the like required for control processing in a control data capacity.

To be more specific, the network slicing resource manager 51 uses a control period and a control data length of each periodically repeated control processing to divide network resources, thereby generating a plurality of virtual networks each having a bandwidth and a required delay time set therein. For example, the network slicing resource manager 51 uses a control period and a control data length of each periodically repeated control processing to generate a virtual network selected from, for example, virtual networks of combinations formed of types A to D described below, so as to maximize transmission efficiency.

For example, the type A is a combination between the wideband and low-delay virtual network (network slicing) 1 and the narrowband and high-delay virtual network (network slicing) 2. For example, the type B is a combination formed of the wideband and low-delay virtual network (network slicing) 1, the narrowband and high-delay virtual network (network slicing) 2, and the intermediate band and intermediate-delay virtual network (network slicing) 3. For example, the type C is a combination between the wideband and low-delay virtual network (network slicing) 1 and the intermediate band and intermediate-delay virtual network (network slicing) 3. For example, the type D is a combination between the narrowband and high-delay virtual network (network slicing) 2 and the intermediate band and intermediate-delay virtual network (network slicing) 3. Alternatively, four or more virtual networks may be generated.

As described above, according to the present embodiment, the network slicing resource manager 51 uses a control period and a control data length of each periodically repeated control processing to generate a virtual network, so as to maximize transmission efficiency. Accordingly, since it is configured that transmission efficiency of divided network resources is maximized even when plural pieces of control data are transmitted periodically and repeatedly, by selecting an appropriate virtual network corresponding to a certain control data length and a certain control period, it is possible to execute control while maintaining the control period of control data.

### (First modification of second embodiment)

The control system 100 according to a first modification of the second embodiment is different from the control system 100 according to the second embodiment in a feature that resources of virtual networks are decided corresponding also to the communication speed of the network NW. Differences from the control system 100 according to the second embodiment are described below.

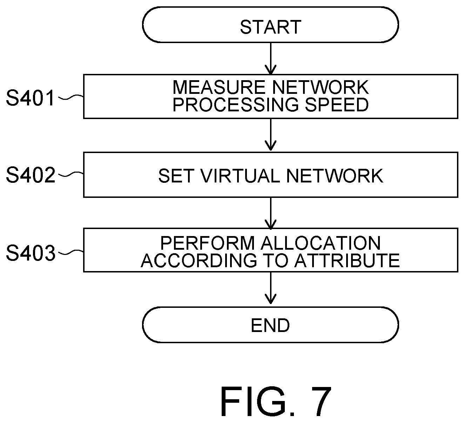

FIG. 7 is a flowchart illustrating a processing example of the network slicing resource manager 51 according to the first modification of the second embodiment. As illustrated in FIG. 7, the network slicing resource manager 51 measures a communication speed of the network NW between the control device 10 and the control device 21 (Step S401). For example, the network slicing resource manager 51 uses a round-trip time of a measurement signal such as a ping to measure the communication speed of the network NW.

Next, the network slicing resource manager 51 uses the control period and the control data length of each periodically repeated control processing to set division of network resources having the communication speed of the network NW reflected thereon (Step S402).

Next, the network slicing resource manager 51 generates a plurality of virtual networks each having a bandwidth and delay set therein (Step S403). In this case, even when a cloud is included in the attribute of control data, a virtual network that can perform transmission more efficiently is selected.

As described above, according to the present embodiment, a virtual network is generated by reflecting the communication speed of the network NW between the control device 10 and the control device 21 and using the control period and the control data length of each periodically repeated control processing, so as to maximize transmission efficiency. Accordingly, even when the control device 21 that executes control via the network NW is included, it is possible to perform transmission more efficiently and to execute control while maintaining the control period of control data.

While certain embodiments have been described above, these embodiments have been presented by way of example only, and are not intended to limit the scope of the invention. The novel devices, methods, and programs described in the present specification may be embodied in a variety of other modes. Various omissions, substitutions, and changes may be made to the modes of the devices, methods, and programs described in the present specification without departing from the spirit of the invention.

### Reference Signs List

1: virtual network, 2: virtual network, 10: control device, 11: control manager, 12: shared memory part, 13: control operator, 14: network slicing selector, 15: communicator, 21: control device, 23: terminal, 25: control target device, 51: network slicing resource manager, 100: control system.

## Claims

1. A control device configured to periodically execute control using a plurality of virtual networks, the control device comprising:
a memory part configured to store therein control data used for the control;
a selector configured to select a virtual network used for the control from a plurality of virtual networks according to an attribute of the control data; and
a communicator configured to transmit the control data using a virtual network selected by the selector.

2. The device of Claim 1, further comprising
a control manager configured to control the selector and the communicator, wherein
the control manager is configured to execute control of transmitting the control data on a basis of an interval of a control period corresponding to the control data.

3. The device of Claim 1, wherein the selector is configured to select a virtual network used for the control on a basis of a control period of the control data.

4. The device of Claim 1, wherein
the control is executable also by a second control device different from the control device through a network,
the memory part has the control data generated by the second control device stored therein through the network, and
the selector is configured to select a virtual network used for the control on a basis of a controlling origin of the control data.

5. The device of Claim 1, wherein the selector is configured to select a virtual network used for the control on a basis of an address of the memory part associated with the control data.

6. The device of Claim 1, wherein the selector is configured to select a virtual network used for the control on a basis of a data capacity of the control data.

7. The device of Claim 1, wherein
the control is executed with respect to a control target device corresponding to device side data of the control target device,
the memory part has the device side data stored therein, and
the control device further comprises a control operator configured to operate the control data using the device side data.

8. The device of Claim 7, wherein
the control is executable also by a second control device different from the control device through a network,
the second control device is configured to operate the control data using the device side data stored in the memory part through the network and store the control data in the memory part, and
the selector is configured to select a virtual network used for the control on a basis of an attribute of the control data.

9. The device of Claim 8, wherein the selector is configured to select a virtual network used for the control on a basis of at least any of a control period, a data capacity, a controlling origin, and a corresponding memory address of the control data.

10. The device of Claim 1, further comprising a network slicing manager configured to manage allocation of network resources to a plurality of virtual networks corresponding to at least any of a control period, a control data length, and a controlling origin of the control data transmitted periodically.

11. A control system comprising:
a control target device;
a terminal configured to perform wireless communication between device side data of a control target device and control data controlling the control target device;
a base station configured to perform the wireless communication using the terminal and a plurality of virtual networks;
a first control device configured to control the control target device periodically using the plurality of virtual networks; and
a second control device connected to the first control device through a network and configured to control the control target device periodically through the first control device, wherein
the first control device comprises:
a memory part configured to store therein the control data used for the control and generated by the first control device and the control data used for the control and generated by the second control device;
a selector configured to select a virtual network used for the control from the plurality of virtual networks according to an attribute of the control data; and
a communicator configured to transmit the control data using a virtual network selected by the selector.

12. A control method of executing control periodically using a plurality of virtual networks, the method comprising:
a selecting step of selecting a virtual network used for the control from a plurality of virtual networks according to an attribute of control data used for the control; and
a communicating step of transmitting the control data using the selected virtual network.
